# EUROPÄISCHE PATENTSCHRIFT

(11) **EP 2 982 894 B1**
(45) Veröffentlichungstag und Bekanntmachung des Hinweises auf die Patenterteilung: **09.05.2018**
(21) Anmeldenummer: 14180026.8
(22) Anmeldetag: 06.08.2014
(51) Int. Cl.: F16L 33/02, F16L 13/14

(54) **Rohrklemmanordnung**
Tube clamp assembly
Dispositif de serrage de tuyau

(43) Veröffentlichungstag der Anmeldung: 10.02.2016
(73) Patentinhaber: Geberit International AG, 8645 Jona (CH)
(72) Erfinder: Lippuner, Marc, 8645 Jona (CH); Graf, Pascal, 8132 Egg bei Zürich (CH); Bachmann, Bastian Marc, 8852 Altendorf (CH)
(74) Vertreter: Frischknecht, Harry Ralph

(56) Entgegenhaltungen:
- WO-A1-98/19096
- DE-A1- 3 018 383
- FR-A1- 2 717 555
- GB-A- 2 403 982
- US-A- 2 922 212
- US-A- 5 926 922

## Beschreibung

### TECHNISCHES GEBIET

Die vorliegende Erfindung betrifft eine Rohrklemmanordnung nach dem Oberbegriff von Anspruch 1.

### STAND DER TECHNIK

Aus dem Stand der Technik sind Rohrklemmanordnungen mit Klemmringen bekannt.
Typischerweise umfassen Klemmringe ein Ohr, das mit einer Zange zusammenpressbar ist um den Klemmring auf einem zu verbindenden Rohrende festzuziehen. Beim Zusammenpressen des Ohrs schliesst sich ein Spalt des Klemmringes, wobei das zu verbindende Rohrende im Bereich dieses Spaltes nicht beaufschlagt wird. Die Pressung des Rohrendes ist deshalb ungleichmässig, was die Dichtigkeit der Verbindung beeinträchtigt.
In der DE 20 2006 006 746 wird eine Rohrklemmanordnung gezeigt, welche kein Ohr, sondern je ein Verriegelungselement an den beiden Enden Klemmring oder der Schelle aufweist. Beim Spannen des Klemmrings werden die beiden Verriegelungselemente miteinander verbunden. Nachteilig an der technischen Lehre der DE 20 2006 006 746 ist, dass sich das Material im Bereich der beiden Verriegelungselemente radial nach aussen bewegen kann, was für die Dichtigkeit zwischen der Rohrklemmanordnung und dem Rohr ein Nachteil darstellt. Weiter wird das Verriegelungselement bei der Herstellung der Verriegelung leicht asymmetrisch verformt, was ebenfalls ein Nachteil für die Dichtwirkung darstellt.

In der FR 2 717 555 A1 wird eine Rohrklemme nach dem Oberbegriff des Anspruchs 1 offenbart.

### DARSTELLUNG DER ERFINDUNG

Ausgehend von diesem Stand der Technik liegt der Erfindung eine Aufgabe zugrunde, eine Rohrklemme anzugeben, welche die Nachteile des Standes der Technik überwindet. Insbesondere soll die Rohrklemme eine verbesserte Dichtigkeit bereitstellen.

Diese Aufgabe löst der Gegenstand vom Anspruch 1. Demgemäss umfasst eine Rohrklemme zum Verbinden eines Rohres ein in ein Ende des Rohres einsteckbares Anschlussstück, eine Klemmschelle mit einem mindestens abschnittsweise um das Anschlussstück umlaufenden ringförmigen Klemmabschnitt, wobei jedes Ende des ringförmigen Klemmabschnitts einen Verriegelungsabschnitt umfasst, wobei die Rohrklemme weiterhin ein Klemmelement mit mindestens einem Rastabschnitt zur Aufnahme der Verriegelungsabschnitte umfasst, und wobei über das Klemmelement die Verriegelungsabschnitte mindestens in einer Klemmlage, in welcher die Verriegelungsabschnitte formschlüssig in die Rastabschnitte eingreifen, miteinander in Verbindung stehen. In einer ersten Weiterbildung umfasst das Klemmelement zwei in Richtung der Mittelachse beabstandet zueinander liegende und quer zur Mittelachse verlaufende Wandungsteile, welche miteinander in Verbindung stehen, wobei die Rastabschnitte von diesen Wandungsteilen abstehen. Die Wandungsteil können dabei u-förmig ausgebildet sein und der Verbindungsabschnitt erstreckt sich in dieses Wandungsteil ein.

Durch die Anordnung eines Klemmelementes, über welches die Verriegelungsabschnitte in der Klemmlage verbunden werden, kann die Dichtigkeit der Rohrklemme verbessert werden. Insbesondere kann das Klemmelement so dimensioniert werden, dass bei der Bereitstellung die Klemmung eine vorteilhafte Verformung aller wesentlichen Teile erreicht wird, was zu einer verbesserten und vor allem um den Umfang gleichmässigen Dichtung führt.

Besonders bevorzugt ist das Klemmelement separat von der Klemmschelle ausgebildet, wobei das Klemmelement mit der Klemmschelle über die Verriegelungsabschnitte, insbesondere in Klemmlage, in Verbindung steht. Durch die separate Ausbildung wird der Grad der Gestaltungsfreiheit im der Konstruktion der Rohrklemme erhöht. Darüber hinaus hat die Trennung den Vorteil, dass die Klemmkraft über mehrere Teile verteilt werden kann.

Vorzugsweise liegt das Klemmelement mindestens in der Ausgangslage der Verrieglungsabschnitte im Wesentlichen zwischen den Verriegelungsabschnitten und/oder zwischen den Verriegelungsabschnitten und der Rohroberfläche.

Vorzugsweise ist die Zahl der Rastabschnitte gleich der Zahl der Verriegelungsabschnitte. Hierdurch kann eine symmetrische Anordnung bereitgestellt werden.

In einer besonders bevorzugten Weiterbildung sind genau zwei Verriegelungsabschnitte und genau zwei Rastabschnitte vorhanden, wobei die Rastabschnitte bezüglich einer durch die Mittelachse des Anschlussstückes sich erstreckende Ebene jeweils in gleichem Abstand zur Ebene liegen. Die Ebene verläuft durch die Mittelachse und im Wesentlichen mittig durch das Klemmelement.

Vorzugsweise umfasst das Klemmelement weiter mindestens ein Lagerungsabschnitt, mit welchem die Verriegelungsabschnitte in einer Ausgangslage in Verbindung stehen. Bei der Bereitstellung der Klemmung sind die Verriegelungsabschnitte aus dem mindestens einen Lagerungsabschnitt in Klemmlage zum mindestens einen Rastabschnitt bewegbar. Die Rastabschnitte liegen dabei näher zusammen als die Lagerungsabschnitte. Mit anderen Worten wird die Distanz zwischen den Verriegelungsabschnitten in der Klemmlage verkürzt, verglichen mit der Distanz in der Ausgangslage.

Die Zahl der Lagerungsabschnitte ist vorzugsweise gleich der Zahl der Verriegelungsabschnitte. Besonders bevorzugt sind genau zwei Verriegelungsabschnitte und genau zwei Lagerungsabschnitte vorhanden, wobei die Lagerungsabschnitte bezüglich einer durch die Mittelachse des Anschlussstückes sich erstreckende Ebene jeweils in gleichem Abstand zur Ebene liegen.

Vorzugsweise erstreckt sich das Klemmelement mit einer Lasche sich mindestens über einen Zwischenraum zwischen den Verriegelungsabschnitten, wobei die Lasche integral am Klemmelement angeformt ist oder wobei die Lasche separat vom Klemmelement ausgebildet ist und mit dem Klemmelement in Verbindung steht. Mit der Lasche wird verhindert, dass sich das Rohr beim Klemmvorgang im Bereich der Verriegelungsabschnitte radial nach aussen, also vom Anschlussstück weg, bewegen kann.

Das Klemmelement, insbesondere die Lasche, weist eine zum Anschlussstück gerichtete Kontaktfläche auf, welche gekrümmt ausgebildet ist. Der Krümmungsradius ist dabei an das zu klemmende Rohr angepasst. Besonders bevorzugt schliesst sich die Kontaktfläche direkt dem Klemmabschnitt der Klemmschelle an, so dass das Rohr sich beim Klemmvorgang nicht oder nur minimal radial ausdehnen kann.

Besonders bevorzugt umfasst der Klemmabschnitt mindestens zwei oder genau zwei beabstandet zueinander angeordnete Klemmringe. Die Klemmringe stehen über den Verriegelungsabschnitt miteinander in Verbindung. Die Rastabschnitte sind zwischen den Klemmringen oder ausserhalb des Zwischenraums zwischen den Klemmringen angeordnet.

Vorzugsweise weist der besagte Klemmring einen runden oder einen rechteckigen Querschnitt auf.

Vorzugsweise ist das Klemmelement an oder in einem Gehäuse gelagert, welches Gehäuse am Anschlussstück gelagert ist. Die Lagerung zwischen Klemmelement und Gehäuse ist vorzugsweise derart, dass das Anschlussstück formschlüssig oder stoffschlüssig am Gehäuse gelagert ist. Besonders bevorzugt wird das Klemmelement teilweise durch das Gehäuse umgeben. Das Gehäuse ist vorzugsweise aus Kunststoff, welcher um das Klemmelement gespritzt wird. Die Klemmschelle ist bevorzugt am Klemmelement gelagert. Die Lagerung ist vorzugsweise ein rein mechanischer Kontakt, beispielsweise formschlüssig oder in der Ausgangslage kraftschlüssig.

Vorzugsweise weisen die Verriegelungsabschnitte je eine Kontaktfläche oder ein Kontaktbereich für die Kontaktierung mit einem Werkzeug auf. Die Kontaktfläche bzw. der Kontaktbereich sind derart angeordnet, dass diese vom Gehäuse freigestellt sind.

Besonders bevorzugt ist zwischen dem Rastabschnitt und dem Lagerungsabschnitt eine Führungsfläche vorhanden, deren Radialabstand zur Mittelachse mit zunehmendem Abstand vom Lagerungsabschnitt gesehen grösser wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Rohrklemmanordnung nach einem ersten Beispiel;
- Fig. 2: eine perspektivische Ansicht der Rohrklemmanordnung nach Figur 1 in Ausgangslage;
- Fig. 3: eine perspektivische Ansicht der Rohrklemmanordnung nach Figur 1 in Klemmlage;
- Fig. 4: eine perspektivische Ansicht einer Rohrklemmanordnung nach einem zweiten Beispiel;
- Fig. 5: eine perspektivische Ansicht der Rohrklemmanordnung nach Figur 4 in Ausgangslage;
- Fig. 6: eine perspektivische Ansicht der Rohrklemmanordnung nach Figur 4 in Klemmlage;
- Fig. 7: eine Schnittansicht durch die Rohrklemmanordnung nach Figur 4;
- Fig. 8: eine perspektivische Ansicht einer Rohrklemmanordnung nach einer ersten Ausführungsform;
- Fig. 9: eine perspektivische Ansicht der Rohrklemmanordnung nach Figur 8 in Ausgangslage;
- Fig. 10: eine perspektivische Ansicht der Rohrklemmanordnung nach Figur 8 in Klemmlage;
- Fig. 11: eine Schnittansicht durch die Rohrklemmanordnung nach Figur 8 in Ausgangslage;
- Fig. 12: eine Schnittansicht durch die Rohrklemmanordnung nach Figur 8 in Klemmlage;
- Fig. 13: eine Explosionsansicht der Rohrklemmanordnung nach Figur 8;
- Fig. 14: eine perspektivische Ansicht einer Rohrklemmanordnung nach einem weiterem Beispiel;

- Fig. 15: eine perspektivische Ansicht der Rohrklemmanordnung nach Figur 14 in Ausgangslage; und
- Fig. 16: eine perspektivische Ansicht der Rohrklemmanordnung nach Figur 14 in Klemmlage.

### BESCHREIBUNG BEVORZUGTER AUSFÜHRUNGSFORMEN

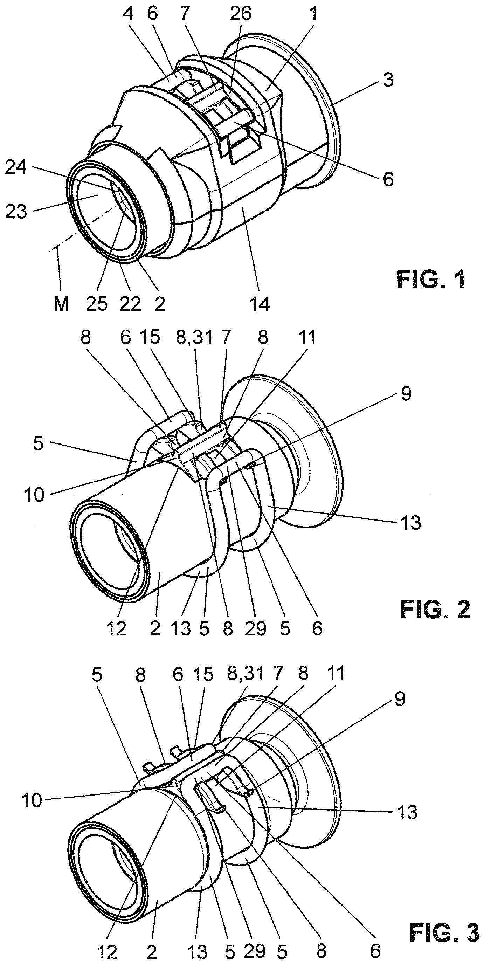

In den Figuren 1 bis 16 werden verschiedene Ausführungsformen bzw. Beispiele einer Rohrklemme 1 zum Verbinden eines Rohrs 2 mit einem in ein Rohr 2 einsteckbares Anschlussstück 3 gezeigt. Unter Bezugnahme auf alle Figuren werden nun diese Ausführungsformen bzw. Beispiele gemeinsam erläutert. Spezifische Merkmale von spezifischen Ausführungsformen werden dann unter Bezugnahme auf die entsprechenden Figuren genauer erläutert.

Das Rohr 2 ist im Wesentlichen zylindrisch ausgebildet und erstreckt sich entlang einer Mittelachse M. Das Rohr 2 kann beispielsweise als Wasserleitung dienen. Das Rohr 2 begrenzt mit einer umlaufenden Seitenwand 22 einen Rohrinnenraum 23. Das Rohr 2 ist vorzugsweise ein Verbundrohr und umfasst mehrere Schichten. Das Rohr 2 kann aber auch ein anderes Rohr sein. Das Rohr 2 wird mit dem Anschlussstück 3 mit Hilfe der Klemmschelle 4 der Rohrklemme 1 verbunden.

Das Anschlussstück 3, welches mit dem Rohr 2 verbunden werden soll, ist im Wesentlichen zylindrisch ausgebildet und erstreckt sich ebenfalls entlang einer Mittelachse M. Das Anschlussstück 3 begrenzt mit einer umlaufenden Seitenwand 24 einen Hohlraum 25. Im verbundenen Zustand mündet der Rohrinnenraum 23 in den Hohlraum 25. Das Anschlussstück kann verschiedenartig ausgebildet sein.

Das Rohr 2 und das Anschlussstück 3 werden mit einer Rohrklemme 1 miteinander verbunden. Dabei ragt das Anschlussstück 3 mit einem Abschnitt in den Rohrinnenraum 23 ein und erstreckt sich soweit in den Rohrinnenraum 23 ein, dass ein Lagerungsabschnitt des Anschlussstückes 3 in den Wirkungsbereich der Rohrklemme 1 zu liegen kommt. Die Rohrklemme 1 kann dann gemäss der untenstehenden Beschreibung verpresst werden und bringt dabei eine Klemmkraft auf das Rohr 2 und das Anschlussstück 3 auf, sodass das Rohr 2 zum Anschlussstück 3 geklemmt wird. Der maximale Aussendurchmesser des Lagerungsbereichs des Anschlussstückes 3 ist etwas kleiner oder gleich dem Aussendurchmesser des Rohres 2 gewählt.

Die Rohrklemme 1 umfasst ein in ein Ende des Rohres 2 einsteckbares Anschlussstück 3 und eine Klemmeschelle 4 mit einem mindestens abschnittsweise um das Anschlussstück 3 umlaufenden ringförmigen Klemmabschnitt 5. Weiter umfasst die Klemmschelle 4 Verriegelungsabschnitte 6, die sich dem Klemmabschnitt 5 anschliessen. Jedem Ende des Klemmabschnittes 5 ist ein Verriegelungsabschnitt 6 zugeordnet. Über die Verriegelungsabschnitte 6 werden der Klemmabschnitt 5 entsprechend gespannt, derart dass sich der Innendurchmesser der Klemmschelle 4 verkleinert und das Rohr 2 gegen das Anschlussstück 3 gepresst wird. Die Rohrklemme 1 umfasst weiterhin ein Klemmelement 7 mit mindestens einem Rastabschnitt 8 zur Aufnahme der Verriegelungsabschnitte 6 der Klemmschelle 4. Der mindestens eine Rastabschnitt 8 arbeitet dabei mit den Verriegelungsabschnitten 6 zusammen und hält die Klemmschelle 4 in der Klemmlage. Über das Klemmelement 7 stehen die Verriegelungsabschnitte 6 mindestens in einer Klemmlage, in welcher die Verriegelungsabschnitte 6 formschlüssig in die Rastabschnitte 8 eingreifen, miteinander in Verbindung. Die Verriegelungsabschnitte 6 greifen also in die Rastabschnitte 8 mechanisch ein und die Rastabschnitte 8 sind dabei derart ausgebildet, dass sich die Verriegelungsabschnitte 6 nicht mehr selbsttätig aus der Klemmlage lösen können.

Mit anderen Worten gesagt dient das Klemmelement 7 dazu, die mindestens zwei Verriegelungsabschnitte 6 der Klemmschelle 4 miteinander zu verbinden und in Klemmlage zu halten. Das Klemmelement 7 ist dabei derart angeordnet, dass der Durchmesser der Klemmschelle 4 in der Klemmlage etwas kleiner als der Aussendurchmesser des Rohrs 2 ist, so dass das Rohr 2 gegen das Anschlussstück 3 geklemmt wird.

In allen Ausführungsformen ist das Klemmelement 7 separat von der Klemmschelle 4 ausgebildet. Unter separat wird in diesem Zusammenhang verstanden, dass das Klemmelement 7 und die Klemmschelle 4 vorzugsweise zwei separat zueinander ausgebildete Teile sind, welche aber miteinander in Verbindung stehen. Die Verbindung kann verschiedenartig sein, aber eine stoffschlüssige Verbindung zwischen Klemmelement 7 und Klemmschelle 4 ist nicht vorhanden. Eine stoffschlüssige Verbindung ist also nicht vorgesehen. Vielmehr ist eine mechanische Verbindung zwischen diesen beiden Elementen bevorzugt, das heisst das Klemmelement 7 steht mit der Klemmschelle 4 über die Verriegelungsabschnitte 6, insbesondere in Klemmlage, mechanisch in Verbindung.

Von der Ausganslage werden die Verriegelungsabschnitte 6 relativ zum, vorzugsweise feststehenden, Klemmelement 7 verschoben, wobei dann der Durchmesser der Klemmschelle 4 verkleinert wird. Hierzu greift der Installateur die Verriegelungsabschnitte 6 beispielsweise mit einem Werkzeug und verändert, insbesondere verringert, die Distanz zwischen den beiden Verriegelungsabschnitt 6 derart, dass der Durchmesser der Klemmeschelle 4 kleiner wird.

In den gezeigten Ausführungsformen ist die Zahl der Rastabschnitte 8 gleich der Zahl der Verriegelungsabschnitte 6. In anderen, nicht gezeigten Ausführungsformen, wäre es auch denkbar, dass das Klemmelement 7 an einem Verriegelungsabschnitt 6 angelenkt ist und dass dann das Klemmelement 7 nur ein Rastabschnitt 8 aufweist, in welcher der andere Verriegelungsabschnitt 6 eingreift.

Besonders bevorzugt sind aber genau zwei Verriegelungsabschnitte 6 und genau zwei Rastabschnitte 8 am Klemmelement 7 angeordnet. Die Rastabschnitte 8 liegen bezüglich einer durch die Mittelachse M des Anschlussstückes 3 und mittig durch das Klemmelement 7 sich hindurch erstreckende Ebene E im gleichen Abstand zur Ebene E. Es handelt sich also um eine symmetrische Anordnung der Rastabschnitte 8, was zu einer guten Kräfteverteilung führen wird.

In den gezeigten Ausführungsformen weist das Klemmelement 7 weiter mindestens ein Lagerungsabschnitt 9 auf. Mit dem Lagerungsabschnitt 9 stehen die Verriegelungsabschnitte 6 der Klemmschelle 4 in der Ausgangslage in Verbindung bzw. in Kontakt. In der Ausgangslage ist die Klemmschelle 4 im unverpressten Zustand. Bei der Bereitstellung der Klemmung werden die Verriegelungsabschnitte 6 aus den Lagerungsabschnitten 9 in Klemmlage zum jeweiligen Rastabschnitt 8 bewegt. Die Zahl der Lagerungsabschnitte 9 ist vorzugsweise gleich der Zahl der Verriegelungsabschnitte 6. In Analogie zu den Rastabschnitten 8 sind besonders bevorzugt genau zwei Lagerungsabschnitte 9 vorhanden.

Vorzugsweise erstreckt sich das Klemmelement 7 mit einer Lasche 10 mindestens über einen Zwischenraum 11 zwischen den Verriegelungsabschnitten 6. Hierdurch wird sichergestellt, dass sich das Rohr 2 in radialer Richtung nach aussen in den Zwischenraum 11 zwischen dem Verriegelungsabschnitten 6 während des Klemmvorgangs verformt. Die Lasche 10 kann dabei integral am Klemmelement 7 angeformt sein oder die Lasche 10 kann separat vom Klemmelement 7 ausgebildet und mit diesem in Verbindung stehen.

Besonders bevorzugt weist das Klemmelement 7, insbesondere die Lasche 10, eine zum Anschlussstück 3 gerichtete Kontaktfläche 12 auf. Die Kontaktfläche 12 ist dabei gekrümmt ausgebildet und ist dem Rohrdurchmesser angepasst. Der Krümmungsradius entspricht dabei im Wesentlichen dem Krümmungsradius des Rohres 2.
Der Klemmabschnitt 5 umfasst vorzugsweise mindestens zwei oder genau zwei beabstandet zueinander angeordnete Klemmringe 13. Die Klemmringe 13 stehen dabei über den Verriegelungsabschnitt 6 miteinander in Verbindung. Die Klemmringe 13 erstrecken sich in den gezeigten Ausführungsformen teilweise um den Umfang des Rohrs 2 bzw. des Anschlussstückes 3. Die Rastabschnitte 8 können, je nach Ausführungsform, zwischen den Klemmringen 13 oder ausserhalb des Zwischenraums zwischen den Klemmringen 13 angeordnet sein.
Weiter umfasst die Rohrklemme 1 nach allen Ausführungsformen besonders bevorzugt ein Gehäuse 14. Das Klemmelement 7 ist dabei am oder im Gehäuse 14 gelagert. Besonders bevorzugt ist das Klemmelement 7 teilweise in das Gehäuse eingelassen. Das Gehäuse 14 ist besonders bevorzugt aus Kunststoff und wird dem Klemmelement 7 angespritzt. Das Gehäuse 14 umfasst eine Aussparung 26, über welche die beiden Verriegelungsabschnitte 6 zugänglich sind. Die Aussparung 26 bzw. deren Rand kann als Führung für ein Werkzeug dienen.
Weiter ist das Gehäuse 14 bevorzugt am Anschlussstück 3 gelagert.

Weiter wird vorzugsweise die Klemmschelle 4 am Klemmelement 7 gelagert, sowie dies oben erläutert wurde. Die Klemmschelle 4 ist vorzugsweise durch das Gehäuse 14 mindestens teilweise überdeckt.
Die Klemmschelle, insbesondere die Verriegelungsabschnitte 6, weisen zudem eine Einbuchtung oder Kontaktfläche 29 für die Kontaktierung mit einem Werkzeug auf. Die Rohrschelle kann mit dem Werkzeug geklemmt werden.
Unter Bezugnahme auf die Figuren 1 und 3 sowie auf die oben genannte Beschreibung werden nun spezifische Merkmale eines ersten Beispiels der Rohrklemme 1 erläutert. In der Figur 1 wird die Rohrklemme 1 mit dem Gehäuse 14 gezeigt. In der Figur 1 werden die Verriegelungsabschnitte 6 in ihrer Ausgangslage gezeigt. Die Verriegelungsabschnitte 6 werden bei der Klemmung von der Ausgangslage in die Klemmlage bewegt und der Abstand zwischen den beiden Verriegelungsabschnitten 6 verringert sich entsprechend. Die Verriegelungsabschnitte 6 werden dabei soweit bewegt, bis sie in den beiden Rastabschnitten 8 einrasten und dort formschlüssig gehalten werden.

In der Figur 2 wird die Rohrklemme gemäss dem ersten Beispiel ohne das Gehäuse gezeigt. Hier befindet sich die Klemmschelle 4 ebenfalls in ihrer Ausgangslage. Die Verriegelungsabschnitte 6 liegen hier in zwei Lagerungsabschnitten 9 am Klemmelement 7. Die Lagerungsabschnitte 9 sorgen dafür, dass die Verriegelungsabschnitte 6 mit dem Klemmelement 7 in Verbindung stehen, so dass die Verriegelungsabschnitte 6 eine definierte Lage einnehmen.
Bei der Klemmung, so wie diese in der Figur 3 gezeigt wird, werden die Verriegelungsabschnitte 6 in Richtung der Rastabschnitte 8 bewegt, bis diese schliesslich in den Rastabschnitten 8 einrasten. In der Figur 3 kann gut erkannt werden, dass dieses Einrasten formschlüssig erfolgt. Im Vergleich zur Figur 2 wird in der Figur 3 gut gezeigt, dass der Innendurchmesser der Klemmschelle 4 durch das Bewegen der Verriegelungsabschnitte 6 von der Ausgangslage in die Klemmlage verkleinert wurde und dass somit das Rohr 2 entsprechend zum Anschlussstück 3, geklemmt wurde.

Die Klemmschelle 4 mit dem Klemmabschnitt 5 und dem Verriegelungsabschnitt 6 ist im Beispiel gemäss der Figuren 1 bis 4 im Wesentlichen einstückig ausgebildet. Es sind dabei zwei Klemmringe 13 vorhanden, welche über zwei Verriegelungsabschnitte 6 miteinander in Verbindung stehen. Jeweils einer der Verriegelungsabschnitte 6 verbindet zwei Enden der Klemmringe 13. Sowohl die Klemmringe 13 als auch die Verriegelungsabschnitte 6 weisen einen kreisrunden Querschnitt auf. Bei der Klemmschelle 4 handelt es sich insbesondere um ein gebogenes Stabmaterial, welches an mindestens an einer Stelle verschweisst ist.

Der Rastabschnitt 8 gemäss dem ersten Beispiel ist eine sich zur Mittelachse M erstreckende Rille 31, welche einmal unterbrochen ist. Gleiches kann für den Lagerungsabschnitt 9 gesagt werden.

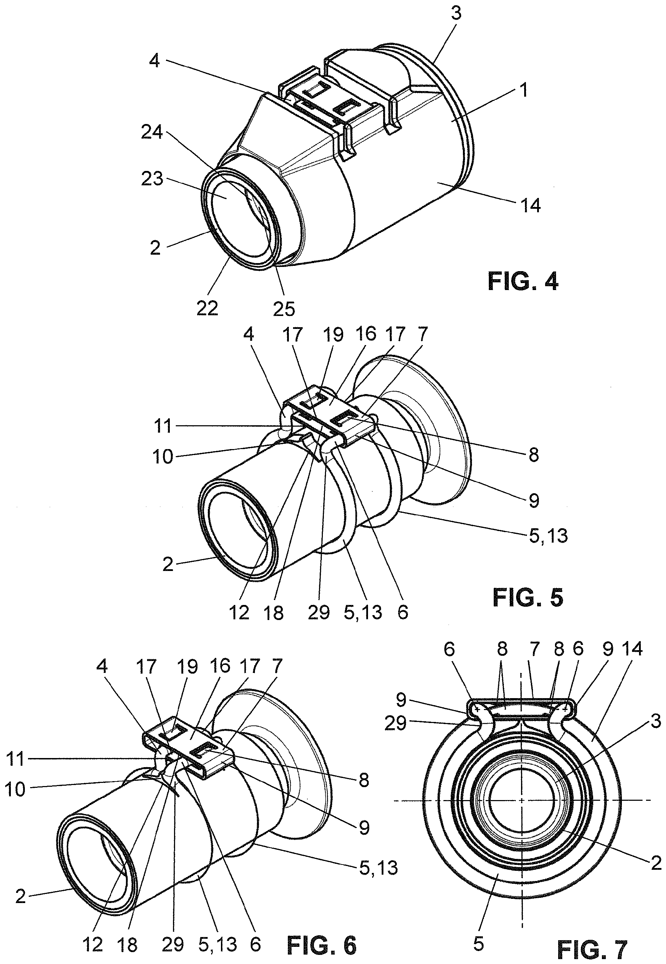

Zwischen dem Rastabschnitt 8 und dem Lagerungsabschnitt 9 ist zudem eine Führungsfläche 15 vorhanden, deren Radialabstand zur Mittelachse M mit zunehmendem Abstand vom Lagerungsabschnitt 9 gesehen in Richtung zum Rastabschnitt 8 grösser wird. Die Führungsfläche 15 dient dazu, dass die Bewegung der Verriegelungsabschnitte 6 kontinuierlich erfolgen kann.
Unter Bezugnahme auf die Figuren 4 bis 7 sowie auf die oben genannte Beschreibung werden nun spezifische Merkmal eines zweiten Beispiels der Rohrklemme 1 erläutert. In den Figuren 4, 5 und 7 wird die Klemmschelle 4 in ihrer Ausgangslage gezeigt. In der Figur 6 in ihrer Klemmlage.

Das Klemmelement 7 gemäss dem zweiten Beispiel umfasst eine Wandung 16, die einen Innenraum 18 begrenzt. Der Innenraum 18 ist über zwei gegenüberliegende Zugangsöffnungen 17 zugänglich. Über diese Zugangsöffnungen 17 ragen die Verriegelungsabschnitte 6 in den Innenraum 18 hinein. Die Rastabschnitte 8 erstrecken sich dabei von der Wandung 16 in den Innenraum 18 hinein, sowie dies beispielsweise in der Figur 7 gezeigt wird. Besonders bevorzugt sind die Rastabschnitte 8 Rastzungen 19, welche von der Wandung 16 abstehen.
Die Breite der Wandung 16 in Richtung der Mittelachse M gesehen ist dabei kleiner als die Breite der Verriegelungsabschnitte 6 in die gleiche Richtung, so dass die Verriegelungsabschnitte mit einem Werkzeug von aussen gut ergriffen werden können. Weiter umfasst auch diese Ausführungsform einen Lagerungsabschnitt 9, welcher durch die Wandung 16 bereitgestellt wird.
Die Lasche 10 ist, sowie dies in der Figur 5 gezeigt wird, hier separat zum Klemmelement 7 ausgebildet. Die Lasche 10 steht aber über das Gehäuse 14 mit dem Klemmelement 7 in Verbindung. Die Lasche 10 erstreckt sich über den Zwischenraum 11 zwischen den Verriegelungsabschnitten 6, sodass das Rohr in diesem Bereich nicht in den Zwischenraum 11 zwischen den Verriegelungsabschnitten 6 bzw. den Endbereichen der Klemmringe beim Vorgang der Klemmung fliessen kann.

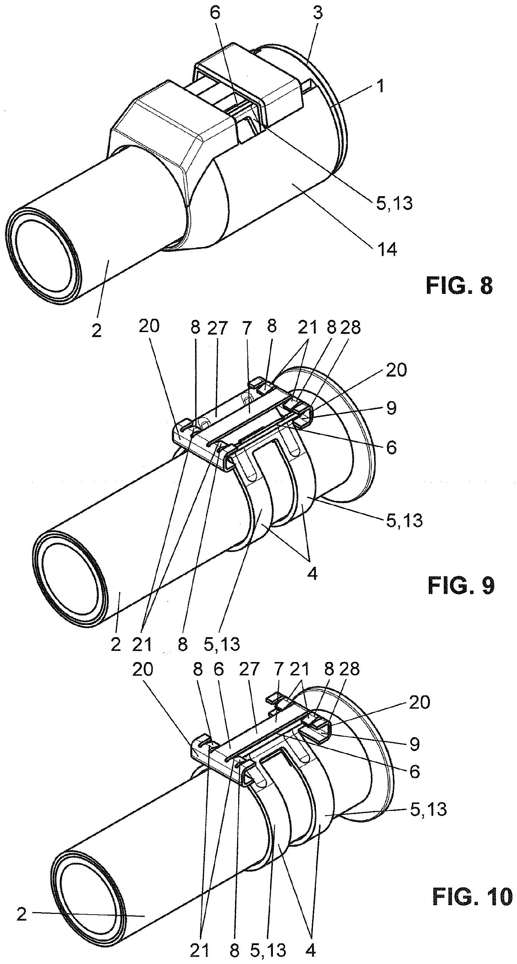

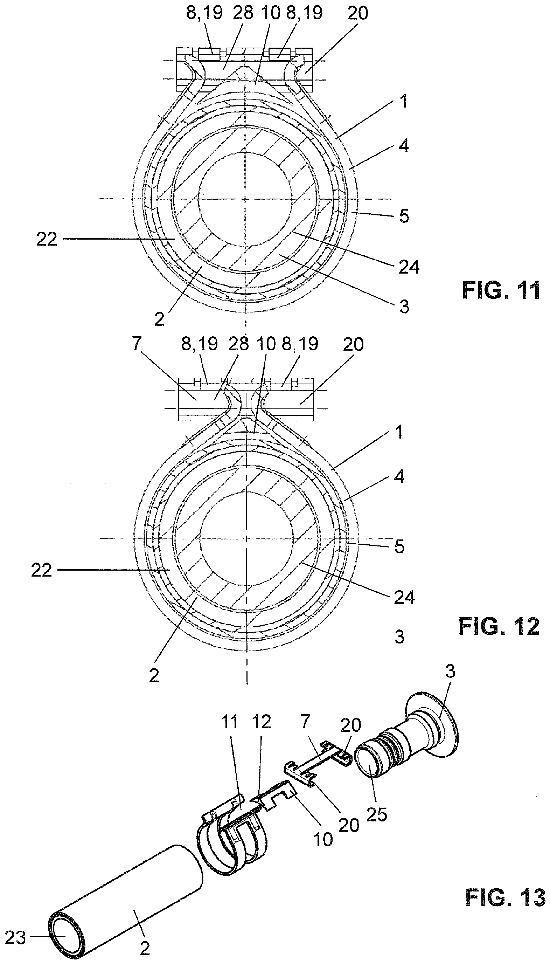

Die Klemmschelle 4 des zweiten Beispiels ist nach dem ersten Beispiel ausgebildet.
Unter Bezugnahme auf die Figuren 8 bis 13 sowie auf die oben genannte Beschreibung werden nun spezifische Merkmal der ersten Ausführungsform der Rohrklemme 1 erläutert. In den Figuren 8, 9 und 11 wird die Klemmschelle 4 in ihrer Ausgangslage gezeigt. In den Figuren 10 und 12 in ihrer Klemmlage.

Nach der ersten Ausführungsform umfasst das Klemmelement zwei in Richtung der Mittelachse beabstandet zueinander liegende und quer zur Mittelachse verlaufende Wandungsteile 20. Die Wandungsteile 20 stehen hier über einen Steg 27 miteinander in Verbindung und begrenzen einen einseitig offenen Innenraum 28, in welchen die Verriegelungsabschnitte 7 einragen. Die Öffnung des Innenraums 28 des einen Wandungsteils 20 ist gegen die Öffnung des Innenraums 28 des anderen Wandungsteils 20 gerichtet. Die Verriegelungsabschnitte 7 liegen zwischen den beiden Wandungsteilen 20 und erstrecken sich in die Wandungsteile 20 ein. Die Rastabschnitte 8 stehen von diesen Wandungsteile 20 ab und ragen in den Innenraum 28 ein.

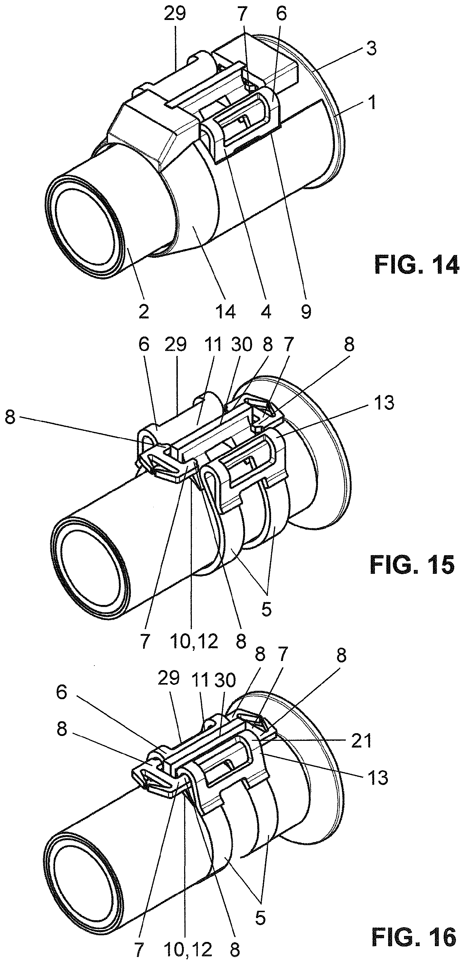

Die Lasche 10 ist in dieser ersten Ausführungsform vom Klemmelement 7 getrennt ausgebildet.
Die Klemmringe 13, welche endseitig mit jeweils einem Verriegelungsabschnitt 6 in Verbindung stehen, sowie die Verriegelungsabschnitte 6 selbst, weisen in dieser ersten Ausführungsform einen rechteckigen Querschnitt auf. Die Verriegelungsabschnitte 6 weisen zudem eine Einbuchtung oder Kontaktfläche 29 für die Kontaktierung mit einem Werkzeug auf. Die Rohrschelle kann mit dem Werkzeug geklemmt werden.
Unter Bezugnahme auf die Figuren 14 bis 16 sowie auf die oben genannte Beschreibung werden nun spezifische Merkmale eines weiteren Beispiels der Rohrklemme 1 erläutert. In den Figuren 14 und 15 wird die Klemmschelle 4 in ihrer Ausgangslage gezeigt. In der Figur 16 in ihrer Klemmlage.

In diesem Beispiel erstreckt sich der Rastabschnitt 8 des Klemmelementes 7 in Richtung der Mittelachse. Hier sind vier Rastabschnitte 8 angeordnet. Der Verriegelungsabschnitt 6 ist als ein in Richtung der Mittelachse offenes Ohr, in welche der Rastabschnitt eingreift, ausgebildet. Hier jeder Verriegelungsabschnitt 6 zwei gegenüberliegende Ohre 21 auf, wobei jeder der Rastabschnitte 8 in jeweils ein Ohr 21 einragt. Das Ohr 21 wird durch umbiegen des Verriegelungsabschnittes 6 hergestellt.

Die Rastabschnitte 8 stehen hier über einen Mittelsteg 30 miteinander in Verbindung. Der Mittelsteg 30 stellt zudem die Lasche 10 bereit. Die Rastabschnitte 8 sind zudem teilweise im Gehäuse 14 eingelassen.

Die Klemmringe 13 weisen wie bei der dritten Ausführungsform einen rechteckigen Querschnitt auf. Die Kontaktfläche 29 ist hier als Ausnehmung im Bereich des Verriegelungsabschnittes 6 angeordnet.

**BEZUGSZEICHENLISTE**

| | | | |
|---|---|---|---|
| 1 | Rohrklemme | 29 | Einbuchtung |
| 2 | Rohr | 30 | Mittelsteg |
| 3 | Anschlussstück | 31 | Rille |
| 4 | Klemmschelle | M | Mittelachse |
| 5 | Klemmabschnitt | E | Ebene |
| 6 | Verriegelungsabschnitt | | |
| 7 | Klemmelement | | |
| 8 | Rastabschnitt | | |
| 9 | Lagerungsabschnitt | | |
| 10 | Lasche | | |
| 11 | Zwischenraum | | |
| 12 | Kontaktfläche | | |
| 13 | Klemmringe | | |
| 14 | Gehäuse | | |
| 15 | Führungsfläche | | |
| 16 | Wandung | | |
| 17 | Zugangsöffnungen | | |
| 18 | Innenraum | | |
| 19 | Rastzungen | | |
| 20 | Wandungsteile | | |
| 21 | Ohr | | |
| 22 | Seitenwand | | |
| 23 | Rohrinnenraum | | |
| 24 | Seitenwand | | |
| 25 | Hohlraum | | |
| 26 | Aussparung | | |
| 27 | Steg | | |
| 28 | Innenraum | | |

## Patentansprüche

1. Rohrklemme (1) zum Verbinden eines Rohres (2) umfassend
ein in ein Ende des Rohres (2) einsteckbares Anschlussstück (3),
eine Klemmschelle (4) mit einem mindestens abschnittsweise um das Anschlussstück (3) umlaufenden ringförmigen Klemmabschnitt (5), wobei jedes Ende des ringförmigen Klemmabschnitts (5) einen Verriegelungsabschnitt (6) umfasst,
wobei die Rohrklemme (1) weiterhin ein Klemmelement (7) mit mindestens einem Rastabschnitt (8) zur Aufnahme der Verriegelungsabschnitte (6) umfasst, wobei über das Klemmelement (7) die Verriegelungsabschnitte (6) mindestens in einer Klemmlage, in welcher die Verriegelungsabschnitte (6) formschlüssig in die Rastabschnitte (8) eingreifen, miteinander in Verbindung stehen, **dadurch gekennzeichnet,**
**dass** das Klemmelement (7) zwei in Richtung der Mittelachse (M) beabstandet zueinander liegende und quer zur Mittelachse (M) verlaufende Wandungsteile (20) umfasst, welche miteinander in Verbindung stehen, wobei die Rastabschnitte (8) von diesen Wandungsteile (20) abstehen.

2. Rohrklemme (1) nach Anspruch 1, **dadurch gekennzeichnet, dass** das Klemmelement (7) separat von der Klemmschelle (4) ausgebildet ist, wobei das Klemmelement (7) mit der Klemmschelle (4) über die Verriegelungsabschnitte (6), insbesondere in Klemmlage, in Verbindung steht.

3. Rohrklemme (1) nach Anspruch 1 oder 2, **dadurch gekennzeichnet, dass** die Zahl der Rastabschnitte (8) gleich der Zahl der Verriegelungsabschnitte (6) ist.

4. Rohrklemme (1) nach einem der vorhergehenden Ansprüche, **dadurch gekennzeichnet, dass** genau zwei Verriegelungsabschnitte (6) und genau zwei Rastabschnitte (8) vorhanden sind, wobei die Rastabschnitte (8) bezüglich einer durch die Mittelachse (M) des Anschlussstückes (3) sich erstreckende Ebene (E) jeweils in gleichem Abstand zur Ebene (E) liegen.

5. Rohrklemme (1) nach einem der vorhergehenden Ansprüche, **dadurch gekennzeichnet, dass** das Klemmelement (7) weiter mindestens ein Lagerungsabschnitt (9) umfasst, mit welchem die Verriegelungsabschnitte (6) in einer Ausgangslage in Verbindung stehen, wobei bei der Bereitstellung der Klemmung die Verriegelungsabschnitte (6) aus dem mindestens einen Lagerungsabschnitt (9) in Klemmlage zum mindestens einen Rastabschnitt (8) bewegbar sind, wobei die Zahl der Lagerungsabschnitte (9) vorzugsweise gleich der Zahl der Verriegelungsabschnitte (6) ist.

6. Rohrklemme (1) Anspruch 5, **dadurch gekennzeichnet, dass** genau zwei Verriegelungsabschnitte (6) und genau zwei Lagerungsabschnitte (9) vorhanden sind, wobei die Lagerungsabschnitte (9) bezüglich einer durch die Mittelachse (M) des Anschlussstückes (3) sich erstreckende Ebene (E) jeweils in gleichem Abstand zur Ebene (E) liegen.

7. Rohrklemme (1) nach einem der vorhergehenden Ansprüche, **dadurch gekennzeichnet, dass** das Klemmelement (7) mit einer Lasche (10) sich mindestens über einen Zwischenraum (11) zwischen den Verriegelungsabschnitten (6) erstreckt, wobei die Lasche (10) integral am Klemmelement (7) angeformt ist oder wobei die Lasche (10) separat vom Klemmelement (7) ausgebildet ist und mit diesem in Verbindung steht.

8. Rohrklemme (1) nach Anspruch 7, **dadurch gekennzeichnet, dass** das Klemmelement (7), insbesondere die Lasche (10), eine zum Anschlussstück (3) gerichtete Kontaktfläche (12) aufweist, welche gekrümmt ausgebildet ist.

9. Rohrklemme (1) nach einem der vorhergehenden Ansprüche, **dadurch gekennzeichnet, dass** der Klemmabschnitt (5) mindestens zwei oder genau zwei beabstandet zueinander angeordnete Klemmringe (13) umfasst, welche Klemmringe (13) über den Verriegelungsabschnitt (6) miteinander in Verbindung stehen und wobei die Rastabschnitte (8) zwischen den Klemmringen (13) oder ausserhalb des Zwischenraums zwischen den Klemmringen (13) angeordnet sind.

10. Rohrklemme (1) nach Anspruch 9, **dadurch gekennzeichnet, dass** der Klemmring (13) einen runden oder rechteckigen Querschnitt aufweist.

11. Rohrklemme (1) nach einem der vorhergehenden Ansprüche, **dadurch gekennzeichnet, dass** das Klemmelement (7) an oder in einem Gehäuse (14) gelagert ist, welches Gehäuse (14) am Anschlussstück (3) gelagert ist, und dass die Klemmschelle (4) am Klemmelement (7) gelagert ist.

12. Rohrklemme (1) nach einem der vorhergehenden Ansprüche **dadurch gekennzeichnet, dass** zwischen dem Rastabschnitt (8) und dem Lagerungsabschnitt (9) eine Führungsfläche (15) vorhanden ist, deren Radialabstand zur Mittelachse (M) mit zunehmendem Abstand vom Lagerungsabschnitt (9) gesehen grösser wird.

## Claims

1. A tube clamp (1) for connecting a tube (2) comprising
a connecting piece (3) which is insertable into an end of the tube (2),
a clamp (4) with an annular clamping section (5) extending at least in sections around the connecting piece (3), wherein each end of the annular clamping section (5) comprises a locking section (6),
wherein the tube clamp (1) further comprises a clamping element (7) with at least one latching section (8) for receiving the locking sections (6), wherein via the clamping element (7) the locking sections (6) are in connection with each other at least in a clamping position, in which the locking sections (6) engage in the latching sections (8) in a positive-locking manner, **characterized in that**
the clamping element (7) comprises two wall parts (20) being spaced from each other in the direction of the central axis (M) and running transverse to the central axis (M), which are in connection with each other, wherein the latching sections (8) protrude from these wall parts (20).

2. The tube clamp (1) according to claim 1, **characterized in that** the clamping element (7) is formed separately from the clamp (4), wherein the clamping element (7) is via the locking sections (6), in particular in the clamping position, in connection with the clamp (4).

3. The tube clamp (1) according to claim 1 or 2, **characterized in that** the number of latching sections (8) equals the number of locking sections (6).

4. The tube clamp (1) according to any one of the preceding claims, **characterized in that** exactly two locking sections (6) and exactly two latching sections (8) are provided, wherein the latching sections (8) with respect to a plane (E) extending through the central axis (M) of the connecting piece (3) are in each case arranged at the same distance from the plane (E).

5. The tube clamp (1) according to any one of the preceding claims, **characterized in that** the clamping element (7) further comprises at least one bearing section (9) with which the locking sections (6) are in connection in an initial position, wherein upon provision of the clamping the locking sections (6) are movable from the at least one bearing section (9) in the clamping position to the at least one latching section (8), wherein the number of bearing sections (9) preferably equals the number of locking sections (6).

6. The tube clamp (1) according to claim 5, **characterized in that** exactly two locking sections (6) and exactly two bearing sections (9) are provided, wherein the bearing sections (9) with respect to a plane (E) extending through the central axis (M) of the connecting piece (3) are in each case arranged at the same distance from the plane (E).

7. The tube clamp (1) according to one of the preceding claims, **characterized in that** the clamping element (7) with a tab (10) extends at least over an intermediate space (11) between the locking sections (6), wherein the tab (10) is formed integrally on the clamping element (7) or wherein the tab (10) is formed separately from the clamping element (7) and is in connection with said clamping element.

8. The tube clamp (1) according to claim 7, **characterized in that** the clamp element (7), in particular the tab (10), comprises a contact surface (12) being directed towards the connecting piece (3) and which is curved.

9. The tube clamp (1) according to any one of the preceding claims, **characterized in that** the clamping section (5) comprises at least two or exactly two clamping rings (13) which are arranged at a distance from each other, which clamping rings (13) are in connection with each other via the locking section (6) and wherein the latching sections (8) are arranged between the clamping rings (13) or outside of the intermediate space between the clamping rings (13).

10. The tube clamp (1) according to claim 9, **characterized in that** the clamping ring (13) comprises a circular or a rectangular cross-section.

11. The tube clamp (1) according to any one of the preceding claims, **characterized in that** the clamping element (7) is mounted on or in a housing (14), which housing (14) is mounted on the connecting piece (3), and **in that** the clamp (4) is mounted on the clamping element (7).

12. The tube clamp (1) according to any one of the preceding claims, **characterized in that** a guiding surface (15) is provided between the latching section (8) and the bearing section (9), the radial distance of which to the central axis (M) is increasing with increasing distance to the bearing section (9).

## Revendications

1. Dispositif de serrage de tuyau (1) pour relier un tuyau (2) comprenant
une pièce de raccord (3) pouvant être insérée dans une extrémité du tuyau (2),
un collier de serrage (4) ayant une section de serrage annulaire (5) entourant la pièce de raccord (3) au moins par sections, où chaque extrémité de la section de serrage annulaire (5) comprend une section de verrouillage (6),
où le dispositif de serrage de tuyau (1) comprend en outre un élément de serrage (7) avec au moins une section d'encliquetage (8) pour le logement des sections de verrouillage (6), où les sections de verrouillage (6) sont reliées l'une à l'autre par l'intermédiaire de l'élément de serrage (7) au moins dans une position d'encliquetage dans laquelle les sections de verrouillage (6) viennent en prise par complémentarité de forme dans les sections d'encliquetage (8), **caractérisé en ce que**
l'élément de serrage (7) comprend deux pièces de paroi (20) espacées l'une de l'autre en direction de l'axe central (M) et s'étendant de manière perpendiculaire par rapport à l'axe central (M), lesquelles sont reliées l'une à l'autre, où les sections d'encliquetage (8) font saillie à partir de ces pièces de paroi (20).

2. Dispositif de serrage de tuyau (1) selon la revendication 1, **caractérisé en ce que** l'élément de serrage (7) est formé de manière séparée du collier de serrage (4), où l'élément de serrage (7) est relié au collier de serrage (4) par l'intermédiaire des sections de verrouillage (6), en particulier en position de serrage.

3. Dispositif de serrage de tuyau (1) selon la revendication 1 ou 2, **caractérisé en ce que** le nombre de sections d'encliquetage (8) correspond au nombre des sections de verrouillage (6).

4. Dispositif de serrage de tuyau (1) selon une des revendications précédentes, **caractérisé en ce que** exactement deux sections de verrouillage (6) et exactement deux sections d'encliquetage (8) sont présentes, où les sections d'encliquetage (8) se situent respectivement à une même distance du plan (E), le plan (E) s'étendant à travers l'axe central (M) de la pièce de raccord (3).

5. Dispositif de serrage de tuyau (1) selon une des revendications précédentes, **caractérisé en ce que** l'élément de serrage (7) comporte en outre au moins une section de palier (9), avec laquelle les sections de verrouillage (6) sont reliées dans une position de départ, où lors de la mise à disposition du serrage les sections de verrouillage (6) peuvent être déplacées depuis au moins une section de palier (9) vers une position de serrage vers au moins une section d'encliquetage (8), où le nombre de sections de palier (9) correspond préférablement au nombre de sections de verrouillage (6).

6. Dispositif de serrage de tuyau (1) selon la revendication 5, **caractérisé en ce que** exactement deux sections de verrouillage (6) et exactement deux sections de palier (9) sont présentes, où les sections de palier (9) se situent respectivement à une même distance d'un plan (E), le plan (E) s'étendant à travers l'axe central (M) de la pièce de raccord (3)..

7. Dispositif de serrage de tuyau (1) selon une des revendications précédentes, **caractérisé en ce que** l'élément de serrage (7) avec une languette (10) s'étend au moins à travers un espace intermédiaire (11) entre les sections de verrouillage (6), où la languette (10) est intégralement formé sur l'élément de serrage (7) et où la languette (10) est formée de manière séparée de l'élément de serrage (7) et est en liaison avec celui-ci.

8. Dispositif de serrage de tuyau (1) selon la revendication 7, **caractérisé en ce que** l'élément de serrage (7), en particulier la languette (10), présente une surface de contact (12) dirigée vers la pièce de raccord (3) et laquelle est formée de manière courbée.

9. Dispositif de serrage de tuyau (1) selon une des revendications précédentes, **caractérisé en ce que** la section de serrage (5) comprend au moins deux ou exactement deux anneaux de serrage (13) disposés de manière espacée l'un par rapport à l'autre, lesquels anneaux de serrage (13) sont reliés ensemble par l'intermédiaire de la section de verrouillage (6) et où les sections d'encliquetage (8) sont disposées entre les anneaux de serrage (13) ou en dehors de l'espace intermédiaire entre les anneaux de serrage (13).

10. Dispositif de serrage de tuyau (1) selon la revendication 9, **caractérisé en ce que** l'anneau de serrage (13) présente une section transversale ronde ou rectangulaire.

11. Dispositif de serrage de tuyau (1) selon une des revendications précédentes, **caractérisé en ce que** l'élément de serrage (7) est monté sur ou dans un boitier (14), lequel boitier (14) est monté sur la pièce de raccord (3) et que le collier de serrage (4) est monté sur l'élément de serrage (7).

12. Dispositif de serrage de tuyau (1) selon une des revendications précédentes, **caractérisé en ce que** une surface de guidage (15) est présente entre la section d'encliquetage (8) et la section de palier (9), dont la distance radiale par rapport à l'axe central (M) augmente avec une distance croissante, vu depuis de la section de palier (9).
